(19) Europäisches Patentamt
European Patent Office
Office européen des brevets

(11) EP 1 905 301 A2

## (12) EUROPEAN PATENT APPLICATION

(43) Date of publication:
02.04.2008 Bulletin 2008/14

(51) Int Cl.:
A01N 37/06 (2006.01)    A01N 37/02 (2006.01)
A01P 1/00 (2006.01)

(21) Application number: 07116789.4

(22) Date of filing: 19.09.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 27.09.2006 JP 2006262117

(71) Applicant: MIURA CO., LTD.
Matsuyama-shi
Ehime 799-2696 (JP)

(72) Inventors:
• Yoshinari, Yuji
Matsuyama-shi Ehime 799-2696 (JP)

• Takai, Masaki
Matsuyama-shi Ehime 799-2696 (JP)
• Okamoto, Yuki
Matsuyama-shi Ehime 799-2696 (JP)
• Fujimura, Tomomi
Maysuyama-shi Ehime 799-2696 (JP)

(74) Representative: Marchant, James Ian
Elkington & Fife,
Prospect House,
8 Pembroke Road
Sevenoaks,
Kent TN13 1XR (GB)

## (54) Disinfectant

(57) The disinfectant capable of realizing effective sterilization by using a surfactant contains water, from which polyvalent cations are removed and to which a sodium ion is added, and a surfactant. An example of the surfactant is a fatty acid salt. When the disinfectant is applied to an object to be treated, fungi and bacteria adhering thereto are sterilized by the action of the surfactant. The surfactant contained in the disinfectant hardly remains on the object owing to the effect of the water from which polyvalent cations are removed and to which a sodium ion is added, and then is not likely to be a source of nutrient for fungi and bacteria. Accordingly, on the object to which the disinfectant is applied, fungi and bacteria are sterilized and propagation thereof is suppressed, and thus a hygienic state of the object is easily maintained. The disinfectant is particularly effective when it is used for, for example, bathrooms, tabs of washing machines, kitchens, toilets, washstands, drainpipes and daily commodities.

EP 1 905 301 A2

## Description

Technical Field

The present invention relates to a disinfectant, in particular, a disinfectant using a surfactant.

Background Art

It is known that a cleaning agent that contains a surfactant exhibits sterilizing properties, in addition to detergency by the surfactant. For example, Japanese Unexamined Patent Publication (Kokai) No. 1-197598 (JP 1989-197598 A) discloses a liquid detergent for laundry use, wherein an anionic surfactant, a cationic surfactant, a nonionic surfactant and sodium benzoate are dissolved in an aqueous medium. The liquid detergent for laundry use excels in detergency and storage stability, and is said to possess sterilizing activity.

However, when cleaning is performed by using a cleaning agent containing a surfactant, a part of the surfactant may remain on the cleaned object in many cases. The residual surfactant then may potentially serve as a source of nutrient for germs such as mold and bacteria, and rather accelerate the propagation of fungi and bacteria.

An object of the present invention is to realize efficient sterilization using a surfactant.

Summary of the Invention

A disinfectant of the present invention contains water, from which polyvalent cations are removed and to which a sodium ion is added, and a surfactant.

When the disinfectant is applied to an object to be treated, fungi and bacteria adhering to the object are sterilized by an effect of the surfactant. The surfactant contained in the disinfectant hardly remains on the object treated due to function of the water from which polyvalent cations are removed and to which a sodium ion is added; thus, the surfactant does not easily become a source of nutrient for fungi and bacteria. Accordingly, on the object to which the disinfectant is applied, fungi and bacteria are sterilized and propagation thereof is suppressed, and therefore, a hygienic state is readily maintained. That is, the disinfectant of the present invention enables effective sterilization treatment of an object, and prevents a surfactant from being a source of nutrient for fungi and bacteria.

Therefore, the disinfectant is particularly effective when it is used as germicides for bathrooms, tubs of washing machines, kitchens, toilets, washstands, drainpipes and daily commodities.

A surfactant used in the disinfectant of the present invention is commonly a fatty acid salt. Particularly, an unsaturated fatty acid salt is preferable. As an unsaturated fatty acid salt, for example, at least one selected from the group consisting of linoleic acid, linolenic acid, myristoleic acid and palmitoleic acid is used.

Other objects and effects of the present invention will be described in detail hereinafter.

Brief Description of the Drawings

Fig. 1 is a graph showing the results of Evaluation 2 in Examples.
Fig. 2 is a graph showing the results of Examples 11 to 19.
Fig. 3 is a graph showing the results of Examples 20 and 21.
Fig. 4 is a graph showing the results of Examples 22 and 23.
Fig. 5 is a graph showing the results of Examples 24 and 25.
Fig. 6 is a graph showing the results of Examples 26 and 27 and Comparative Examples 11 and 12.

Description of the Preferred Embodiment

The disinfectant of the present invention contains water from which polyvalent cations are removed and to which a sodium ion is added (hereinafter such water is called "functional water" in some cases), and a surfactant.

The functional water used in the present invention is obtained by treatment of water (raw water), such as tap, ground, river, lake and well water, with a cation exchange resin. In this treatment, a calcium ion (bivalent cation), magnesium ion (bivalent cation), copper ion (bivalent cation), iron ion (bivalent and trivalent cations), aluminum ion (trivalent cation) and the like contained in the raw water are exchanged with a sodium ion (monovalent cation) contained in the cation exchange resin.

The cation exchange resin used for the treatment of raw water is a synthetic resin, wherein a suflonic acid group is introduced to a matrix of a cross-linked three dimensional polymer such as a copolymer of styrene and divinylbenzene, and the sulfonic acid group forms a sodium salt.

In the functional water, it is preferable that a concentration of polyvalent cations is commonly adjusted to less than 0.2 mmol/l, and particularly preferable to be adjusted to less than the measurement limit, which signifies substantially zero level. Here, the concentration of polyvalent cations denotes a concentration measured on the basis of ICP emission spectroscopic analysis.

On the other hand, in the functional water, it is preferable that a concentration of a sodium ion is commonly adjusted to 0.3 mmol/l or more and less than 500 mmol/l, and more preferable to be adjusted to 0.5 mmol/l or more and less than 200 mmol/l. Here, the concentration of a sodium ion denotes a concentration measured on the basis of ICP emission spectroscopic analysis.

A surfactant used in the present invention is not particularly limited. Examples thereof include anionic, cationic, ampholytic and nonionic surfactants.

Examples of the anionic surfactant include fatty acid salts (soaps), alkylbenzene sulfonate salts, alkyl sulfate salts, $\alpha$-olefin sulfonate salts and N-acyl glutamate salts. Two or more of these anionic surfactants may be used in combination.

Examples of the cationic surfactant include N-alkyltrimethyl ammonium chloride and N-alkylbenzyl dimethyl ammonium chloride. Two or more of these cationic surfactants may be used in combination.

Examples of the ampholytic surfactant include N-alkyl-$\beta$-alanine and N-alkylcarboxy betaine. Two or more of these ampholytic surfactants may be used in combination.

Examples of the nonionic surfactant include polyoxyethylene alkyl ether, polyoxyethylene alkylphenyl ether, fatty acid diethanol amide and fatty acid sucrose ester. Two or more of these nonionic surfactants may be used in combination.

In the present invention, the above various surfactants can be used in combination with other kinds of surfactants.

Preferred surfactants used in the present invention are fatty acid salts, particularly, alkali metal salts of saturated or unsaturated fatty acid having 5 to 22 carbon atoms. An alkali metal salt of saturated fatty and an alkali metal salt of unsaturated fatty acid can be used in combination.

With regard to the saturated fatty acid salts, those having 12 to 16 carbon atoms are particularly preferred. Specifically, sodium salts and potassium salts of lauric acid, myristic acid, pentadecylic acid and palmitic acid are exemplified. On the other hand, with regard to the unsaturated fatty acid salts, those having 14 to 18 carbon atoms are preferred, and those having a larger number of unsaturated bonds between carbons are particularly preferred. Specific examples of the unsaturated fatty acids include sodium salts and potassium salts of myristoleic acid, palmitoleic acid, oleic acid, linoleic acid and linolenic acid.

As for fatty acid salts, it is preferable to use unsaturated fatty acid salts since sterilizing ability of the disinfectant of the invention can be enhanced. Particularly, salts of linoleic acid, linolenic acid, myristoleic acid and palmitoleic acid are preferred, and sodium salts thereof are more preferred.

In the disinfectant of the present invention, an amount of a surfactant to be used is preferably adjusted to from 10 mg to 400 g per liter of functional water, and more preferably adjusted to from 100 mg to 200 g. When the amount of the surfactant is less than 10 mg, there is a possibility that the disinfectant of the present invention does not exhibit effective sterilization action. On the contrary, when it exceeds 400 g, the surfactant is apt to remain in an object to be treated, and there is a possibility that fungi and bacteria rather propagate in the object by consuming the residual surfactant as a source of nutrient.

The disinfectant of the present invention may contain other components other than the above functional water and surfactant to the extent that they do not spoil the object of the present invention. Examples of other components include fragrant materials such as grapefruit oil, spearmint oil, nutmeg oil and mandarin oil, and antioxidants such as tocopherol, ascorbyl stearate ester, sodium erythorbate, ascorbic acid, citric acid and dibutyl hydroxytoluene. Two or more of the fragrant materials and antioxidants can be used in combination.

The disinfectant of the present invention is easily prepared through the processes of treating raw water with the above cation exchange resin, and to the resulting functional water, properly adding a surfactant and, if necessary, the above other components. Accordingly, the disinfectant is easily produced in large quantity, and also can be produced at low cost.

An object to be treated with the disinfectant of the present invention is not particularly limited as long as a sterilization treatment is required. Examples thereof include bathrooms (particularly such as bathtubs, floors, walls and drain outlets), tubs of washing machines, kitchens (particularly such as sinks, floors and walls), toilets (particularly such as toilet bowls, floors and walls), washstands, drainpipes, daily commodities (for example, such as tableware, rain gear, foot gear, clothing and linens) and food such as vegetables and fruits.

In case that the above object to be treated is cleaned with the disinfectant of the present invention, generally, the disinfectant is spread over the object. Regions needed to clean in the object also can be rubbed or wiped with a cleaning tool such as a cloth, sponge or brush, while the disinfectant is watered to run over the object to be cleaned. The object cleaned to which the disinfectant is applied in such a manner may be dried as it is, but is preferably dried after rinsed only with the functional water.

In case that the disinfectant of the present invention is applied to food, the food is immersed in the disinfectant, and then washed with water, or preferably washed with the functional water.

Furthermore, in case that the disinfectant of the present invention is applied to water-absorbing daily commodities such as foot gear, clothing and linens, these commodities are immersed in the disinfectant of the present invention and squeeze washed therein, and then rinsed with water, preferably with the functional water. The treatment of this kind to the daily commodities may be carried out manually or, according to its kind, performed by a washing machine.

Since the disinfectant of the present invention contains the above functional water and surfactant, various germs such as mold and bacteria, which adhere to an object to be cleaned, can be sterilized by the effect of the surfactant. Also, since the surfactant contained in the disinfectant, which is applied to the object to be cleaned, hardly remains on the object due to the action of the functional water, a possibility that the surfactant serves as a source of nutrient and accelerate the propagation of fungi and bacteria in the object is less. In addition, the surfactant can also wash away stain adhering to the object, which otherwise becomes a source of nutrient for fungi and bacteria. Accordingly, in the object to which the disinfectant of the present invention is applied, fungi and bacteria are sterilized and thereby propagation thereof is suppressed. Thus, a hygienic state of the object is readily maintained.

In the above embodiment, water from which polyvalent cations are removed and to which a sodium ion is added is used as functional water, but the functional water may be such that polyvalent cations are removed and an alkali metal ion other than a sodium ion, such as a potassium ion, is added. Functional water of this kind can be obtained by treating raw water with a cation exchange resin, wherein a sulfonic acid group forms an alkali metal salt such as a potassium salt.

Examples

Examples 1 to 4

A plate-shaped test piece (1.0 $\times$ 26 $\times$ 76 mm) made of a material shown in Table 1 was placed in an upright position in a glass cylindrical water tank (inside diameter 70 mm $\times$ height 120 mm) with an internal volume of 460 ml, which has a drain channel and set on a magnetic stirrer. A stir bar was placed therein too. For two months, cleaning operation was implemented to the test piece at a temperature of 25°C, 3 times a day, which are at 10 a.m., 1 p.m., and 4 p.m..

In the every cleaning operation, a washing process and a rinsing process were conducted in this order. In the washing process, first, 150 ml of water was supplied in the water tank so as half of the test piece to be immersed. Then, soap (trade name of "Nantaro Soap" manufactured by Miura Co., Ltd.) was added to water at the ratio of 1.13 g per liter to prepare a disinfectant. Also, an artificial sebum stain composition was added to the disinfectant at the ratio of 0.109 g per liter. Next, the magnetic stirrer was turned on, and water in the water tank was stirred for 5 minutes. The water used here was functional water, which was obtained by treating tap water supplied in Matsuyama City, Ehime Japan, with a cation exchange resin. It satisfied the conditions that a concentration of polyvalent cations is less than 0.2 mmol/l and that of a sodium ion is 0.3 mmol/l or more and less than 500 mmol/l. The artificial sebum stain composition used here contained 0.056 g of oleic acid, 0.031 g of triolein, 0.003 g of cholesterol, 0.005 g of squalene and 0.014 g of gelatin per 0.109 g of the artificial sebum stain composition.

On the other hand, in the rinsing process, all of the water in the water tank was drained off, and 150 ml of the functional water alone was supplied in the water tank, and then stirred for 5 minutes. The rinsing process was repeated twice.

During the above two months, black mold (Cladosporium sphaerospermum NBRC4460) and green mold (Penicillum digitatum NBRC7876) were added, respectively, to the disinfectant once a week in an amount of about $10^2$ CFU/ml. The unit "CFU" stands for "colony forming unit".

After two months, the test piece was taken out of the water tank, and immersed in a 100 ml of sterilized phosphate buffer solution. Then, substances adhering to the test piece were scraped off into the sterilized phosphate buffer solution using a sterilized spatula, and the test piece was subjected to ultrasonic cleaning in the sterilized phosphate buffer solution for 30 minutes.

Comparative Examples 1 to 4

The same operation as in Examples 1 to 4 was implemented except for using tap water supplied in Matsuyama City, Ehime Japan, without a treatment as the water for preparing a disinfectant, instead of the functional water.

Examples 5 to 8

The same operation as in Examples 1 to 4 was implemented except for adding a synthetic detergent (trade name of "Attack" manufactured by Kao Corporation) to the functional water at the ratio of 0.67 g per liter, instead of adding soap to the functional water at the ratio of 1.13 g per liter.

Comparative Examples 5 to 8

The same operation as in Examples 5 to 8 was implemented except for using tap water supplied in Matsuyama City, Ehime Japan, without a treatment as the water for preparing a disinfectant, instead of the functional water.

Evaluation 1

In Examples 1 to 8 and Comparative Examples 1 to 8, the numbers of mold spores and viable bacteria adhering to the test piece were counted after the treatment over two months, and the amount of organic substances adhering to the test piece was measured. Furthermore, a state of mold growth in the water tanks used in each Example and Comparative Example was evaluated. The measurement and evaluation methods are as follows. The results are shown in Table 1.

(Number of mold spores)

The sterilized phosphate buffer solution after ultrasonic cleaning was diluted with a sterilized phosphate buffer solution. A 100 μl of the resulting solution was cultured at 25°C for 5 days using a PDA (Potato Dextrose Agar) plate medium containing chloramphenicol, and a number of fungous colonies thereon was counted by visual observation. The dilution rate of the sterilized phosphate buffer solution after ultrasonic cleaning was determined as 1 time in Examples 1 to 8, and 10 times in Comparative Examples 1 to 8. Based on the result, the number of mold spores adhering to a test piece was calculated by the following equation (1).

```
Number of mold spores (CFU/test piece) =

        Number of fungous colonies × Dilution rate × 1,000

                                                              (1)
```

(Viable bacterial counts)

The sterilized phosphate buffer solution after ultrasonic cleaning was diluted with a sterilized phosphate buffer solution. A 1 ml of the resulting solution was cultured at 35°C for 3 days using a standard agar medium, and a number of bacterial colonies growing thereon was counted by visual observation. The dilution rate of the sterilized phosphate buffer solution after ultrasonic cleaning was determined as 1,000 times in Examples 1 to 8, and 10, 000 times in Comparative Examples 1 to 8. Based on the result, the number of viable bacteria adhering to a test piece was calculated by the following equation (2).

```
Viable bacterial counts (CFU/test piece) =

        Number of bacterial colonies × Dilution rate × 100

                                                              (2)
```

(Amount of organic substances)

By way of a potassium permanganate titration method, which was stipulated in the 2001 edition of Water Supply Test Method (Japan Water Work Association), COD of the sterilized phosphate buffer solution after ultrasonic cleaning was calculated, and the value was determined as the amount of organic substances.

(State of mold growth in water tank)

After the cleaning operation over two months, a state inside the water tank was visually observed, and the state of mold growth was evaluated based on the following criteria.

A:    Mold contamination is hardly observed.
B:    Mold contamination is somewhat observed.
C:    Mold contamination is clearly observed.

Table 1

| | | Materials of test piece | Water | Surfactants | Number of mold spores (CFU/test piece) | Viable bacterial counts (CFU/test piece) | Amount of organic substances (COD) (mg/test piece) | State of mold growth in water tank |
|---|---|---|---|---|---|---|---|---|
| Examples | 1 | Polypropylene resin | Functional water | Soap | $< 1.0 \times 10^3$ | $2.6 \times 10^5$ | 0.74 | A |
| | 2 | Polycarbonate resin | Functional water | Soap | $< 1.0 \times 10^3$ | $2.7 \times 10^5$ | 0.89 | A |
| | 3 | Stainless steel (SUS304) | Functional water | Soap | $1.0 \times 10^3$ | $3.1 \times 10^5$ | 0.62 | A |
| | 4 | Glass | Functional water | Soap | $1.0 \times 10^3$ | $6.0 \times 10^4$ | 0.44 | A |
| Comparative Examples | 1 | Polypropylene resin | Tap water | Soap | $5.8 \times 10^4$ | $2.5 \times 10^8$ | 21.0 | C |
| | 2 | Polycarbonate resin | Tap water | Soap | $1.7 \times 10^5$ | $3.0 \times 10^8$ | 22.6 | C |
| | 3 | Stainless steel (SUS304) | Tap water | Soap | $1.3 \times 10^5$ | $2.6 \times 10^8$ | 22.4 | C |
| | 4 | Glass | Tap water | Soap | $3.3 \times 10^5$ | $1.5 \times 10^8$ | 15.2 | C |
| Examples | 5 | Polypropylene resin | Functional water | Synthetic detergent | $7.5 \times 10^3$ | $9.2 \times 10^6$ | 0.46 | A |
| | 6 | Polycarbonate resin | Functional water | Synthetic detergent | $6.7 \times 10^3$ | $7.4 \times 10^6$ | 0.37 | A |
| | 7 | Stainless steel (SUS304) | Functional water | Synthetic detergent | $4.0 \times 10^4$ | $5.2 \times 10^6$ | 0.32 | A |
| | 8 | Glass | Functional water | Synthetic detergent | $3.3 \times 10^4$ | $5.0 \times 10^6$ | 0.35 | A |
| Comparative Examples | 5 | Polypropylene resin | Tap water | Synthetic detergent | $2.0 \times 10^6$ | $2.4 \times 10^7$ | 0.51 | C |
| | 6 | Polycarbonate resin | Tap water | Synthetic detergent | $1.5 \times 10^6$ | $6.4 \times 10^7$ | 0.55 | C |
| | 7 | Stainless steel (SUS304) | Tap water | Synthetic detergent | $1.9 \times 10^6$ | $9.5 \times 10^7$ | 0.52 | C |
| | 8 | Glass | Tap water | Synthetic detergent | $7.8 \times 10^5$ | $2.9 \times 10^7$ | 0.36 | B |

According to Table 1, the test pieces of Examples 1 to 8, wherein cleaning operation was implemented by using a disinfectant in which a soap or synthetic detergent was added to functional water, counted less mold spores and viable bacteria, and had less organic substances, as compared with the test pieces of Comparative Examples 1 to 8. In addition, the water tanks used in Examples 1 to 8 had less mold growth observed, as compared with Comparative Examples 1 to 8. Accordingly, the disinfectant used in Examples 1 to 8 excels in sterilizing effect.

Example 9

A soap (trade name of "Nantaro Soap" manufactured by Miura Co., Ltd.) was dissolved in water, thereby soapy water (disinfectant) of 0.01% by weight concentration was prepared. The water used here was functional water obtained by treating tap water supplied in Matsuyama City, Ehime Japan, with a cation exchange resin. The water satisfied the conditions that the concentration of polyvalent cation is less than 0.2 mmol/l and the concentration of a sodium ion is 0.3 mmol/l or more and less than 500 mmol/l.

Example 10

Soapy water (disinfectant) was prepared in the same manner as in Example 9, except for changing the concentration to 0.05% by weight.

Comparative Example 9

Soap (trade name of "Nantaro Soap" manufactured by Miura Co., Ltd. ) was dissolved in tap water supplied in Matsuyama City, Ehime Japan, thereby soapy water having a concentration of 0.01 % by weight was prepared.

Comparative Example 10

Soapy water (disinfectant) was prepared in the same manner as in Comparative Example 9, except for changing the concentration to 0.05% by weight.

Evaluation 2

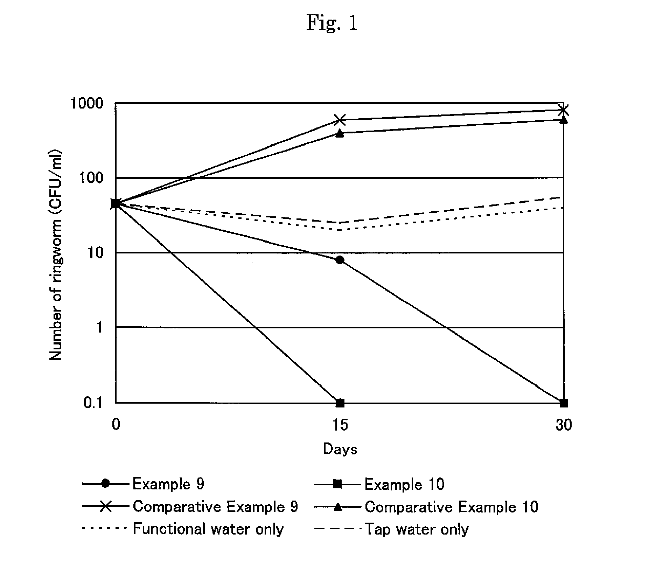

Ringworm (Trichophyton rubrum NBRC32409) was added to the soapy water prepared in Examples 9 and 10 and Comparative Examples 9 and 10 in an amount of about 30 CFU/ml, which was let stand at a temperature of 25°C for 30 days. During this time, the diachronic change in the number of ringworm in the soapy water was measured everyday. The results are shown in Fig. 1. For reference, Fig. 1 also shows diachronic changes in the number of ringworm in case of adding ringworm only to functional water that was used in Examples 9 and 10 (denoted as "functional water only" in Fig. 1), and in case of adding ringworm only to tap water that was used in Comparative Examples 9 and 10 (denoted as "tap water only" in Fig. 1). The measurement of the number of ringworm was conducted as follows.

Soapy water (50 ml) containing ringworm in a 100 ml Erlenmeyer flask was stirred at a rate of 10, 000 rpm for 5 minutes using a homogenizer (trade name of "Ace Homogenizer AM-3, manufactured by Nihonseiki Kaisha LTD.) to dissociate the ringworm, and then it was subjected to ultrasonic waves. A sample of 100 μl was taken out from the soapy water and used without being diluted. The sample was cultured at 25°C for 5 days using a PDA (Potato Dextrose Agar) plate medium containing chloramphenicol, and the number of the growing ringworm colonies was counted by visual observation. Based on the result, the number of ringworm contained in the soapy water was calculated using the following equation (3)

```
    Number of ringworm (CFU/ml) =

              Number of ringworm colonies × 10          (3)
```

According to Fig. 1, the soapy water used in Examples 9 and 10 excels in sterilizing effect against ringworm.

Examples 11 to 19

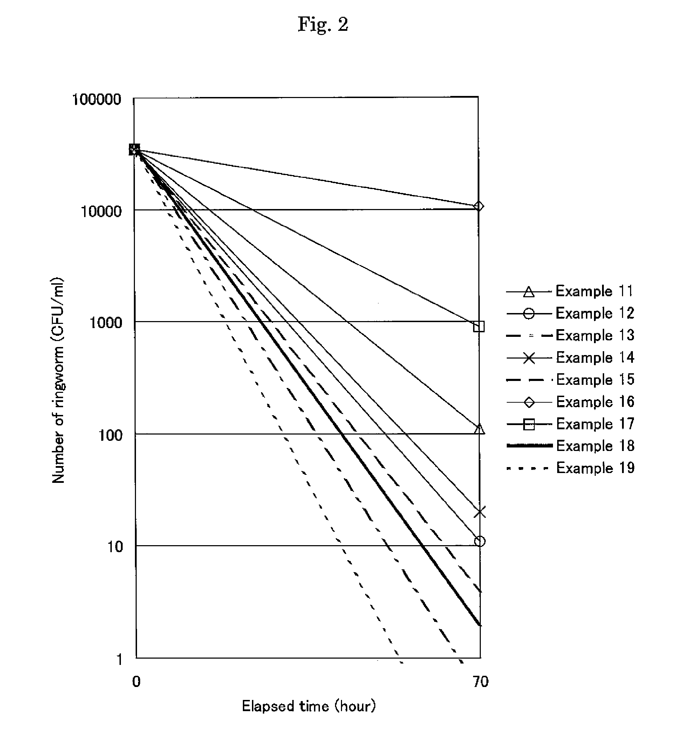

A fatty acid sodium salt shown in Table 2 was dissolved in functional water, which was obtained by treating tap water supplied in Matsuyama City, Ehime Japan, with a cation exchange resin, to prepare a 5 mM aqueous solution of fatty acid sodium salt (disinfectant). Ringworm (Trichophyton mentagrophytes) was added to the aqueous solution of fatty acid sodium salt in an amount of about $2 \times 10^4$ CFU/ml, which was shaken at 35°C, and the diachronic change in the number of the ringworm was measured over the following 70 hours. The number of the ringworm was measured as follows. After shaking the aqueous solution of fatty acid sodium salt containing ringworm, a sample was taken therefrom and properly diluted. A 100 $\mu$l of the diluted sample was cultured at 25°C for 5 days using a PDA (Potato Dextrose Agar) plate medium containing chloramphenicol, and the number of the growing ringworm colonies was counted by visual observation. Based on the result, the number of the ringworm contained in the disinfectant was calculated using the following equation (4). The results are shown in Fig. 2.

$$\text{Number of ringworm (CFU/ml)} =$$

$$\text{Number of ringworm colonies} \times \text{Dilution rate} \times 10$$

$$(4)$$

Table 2

| Examples | Fatty acid sodium salt | | |
|---|---|---|---|
| | Name | Number of carbon atom | Number of carbon-carbon double bond |
| 11 | Sodium laurate | 12 | 0 |
| 12 | Sodium myristate | 14 | 0 |
| 13 | Sodium myristolate | 14 | 1 |
| 14 | Sodium palmitate | 16 | 0 |
| 15 | Sodium palmitolate | 16 | 1 |
| 16 | Sodium stearate | 18 | 0 |
| 17 | Sodium oleate | 18 | 1 |
| 18 | Sodium linoleate | 18 | 2 |
| 19 | Sodium linolenate | 18 | 3 |

According to Fig. 2, it is found that an aqueous solution of a fatty acid sodium salt exhibits high sterilizing ability particularly when a fatty acid sodium salt having 12 to 16 carbon atoms is used. When carbon numbers of the fatty acid sodium salts are identical, unsaturated fatty acid sodium salts, particularly those having many carbon-carbon double bonds, exhibit higher sterilizing power.

Example 20

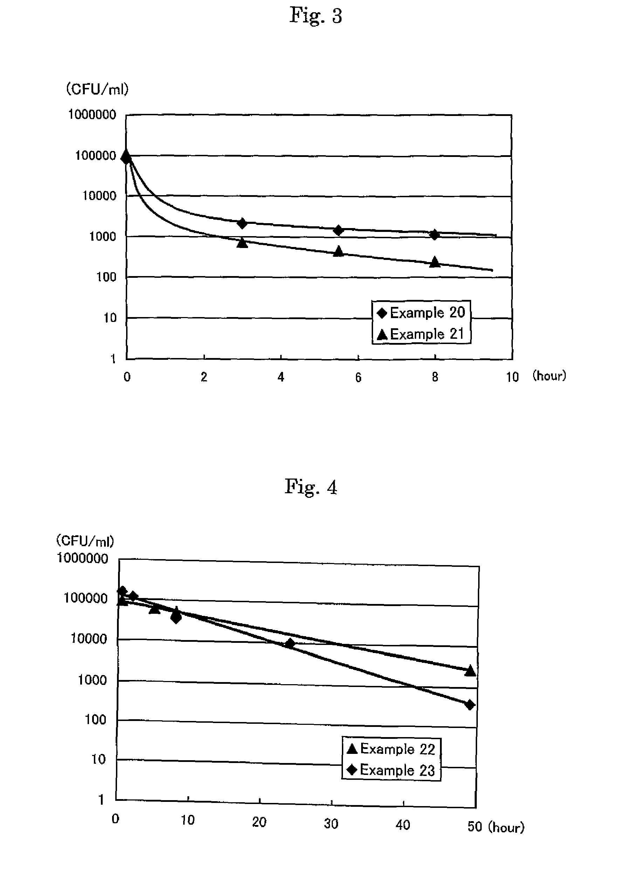

A sodium myristate salt was dissolved in functional water, which was obtained by treating tap water supplied in Matsuyama City, Ehime Japan, with a cation exchange resin, to prepare a disinfectant having a concentration of 5 mM. Black mold (Cladosporium sphaerospermum NBRC4460) was added to the disinfectant in an amount of about $1 \times 10^5$ CFU/ml, which was shaken at 35°C, and then the diachronic change in the number of the black mold spores was measured. The measurement of the number of the black mold spores was conducted as follows. First, the disinfectant containing the black mold was properly diluted with a sterilized phosphate buffer solution. Then, a sample of 100 $\mu$l taken therefrom was cultured at 25°C for 5 days using a PDA (Potato Dextrose Agar) plate medium containing chloramphenicol, and the number of the growing black mold colonies was counted by visual observation. Based on the result, the number of the black mold contained in the disinfectant was calculated using the following equation (5). The results are shown in Fig. 3.

$$\text{Number of black mold spores (CFU/ml) =}$$

$$\text{Number of black mold colonies × Dilution rate × 10}$$

$$(5)$$

Example 21

The operation was implemented in the same manner as in Example 20, except for using a sodium linolenate salt instead of a sodium myristate salt, and the diachronic change in the number of black mold spores was measured. The results are shown in Fig. 3.

Example 22

A sodium myristate salt was dissolved in functional water, which was obtained by treating tap water supplied in Matsuyama City, Ehime Japan, with a cation exchange resin, to prepare a disinfectant having a concentration of 5 mM. Colon bacillus (E. coli NBRC3301) was added to the disinfectant in an amount of about $1 \times 10^5$ CFU/ml, which was shaken at 35°C, and then the diachronic change in the number of the colon bacillus was measured. The number of the colon bacillus was measured as follows. First, the disinfectant containing the colon bacillus was properly diluted with a sterilized phosphate buffer solution. Then, a sample of 100 $\mu$l taken therefrom was cultured at 35°C for 3 days using a standard agar medium, and the number of the growing colon bacillus colonies was counted by visual observation. Based on the result, the number of the colon bacillus contained in the disinfectant was calculated using the following equation (6). The results are shown in Fig. 4.

$$\text{Number of colon bacillus (CFU/ml) =}$$

$$\text{Number of colon bacillus colonies × Dilution rate × 10}$$

$$(6)$$

Example 23

The operation was implemented in the same manner as in Example 22, except for using a sodium linolenate salt instead of a sodium myristate salt, and the diachronic change in the number of colon bacillus was measured. The results are shown in Fig. 4.

Example 24

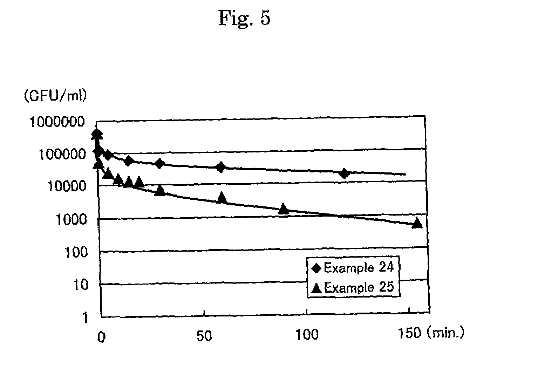

A sodium myristate salt was dissolved in functional water, which was obtained by treating tap water supplied in Matsuyama City, Ehime Japan, with a cation exchange resin, to prepare a disinfectant having a concentration of 5 mM. Staphylococcus aureus bacteria (S. aureus NBRC13276) was added to the disinfectant in an amount of about $1 \times 10^5$ CFU/ml, which was shaken at 35°C, and then the diachronic change in the number of the staphylococcus aureus bacteria was measured. The number of the staphylococcus aureus bacteria was measured as follows. First, the disinfectant containing the staphylococcus aureus bacteria was properly diluted with a sterilized phosphate buffer solution. Then, a sample of 100 $\mu$l taken therefrom was cultured at 35°C for 3 days using a standard agar medium, and the number of the growing staphylococcus aureus bacterial colonies was counted by visual observation. Based on the result, the number of the staphylococcus aureus bacteria (S. aureus bacteria) contained in the disinfectant was calculated using the following equation (7) . The results are shown in Fig. 5.

```
Number of S. aureus bacteria (CFU/ml) =

  Number of S. aureus bacterial colonies × Dilution rate × 10
```

$$(7)$$

Example 25

The operation was implemented in the same manner as in Example 24, except for using a sodium linolenate salt instead of a sodium myristate salt, and the diachronic change in the number of staphylococcus aureus bacteria was measured. The results are shown in Fig. 5.

Example 26

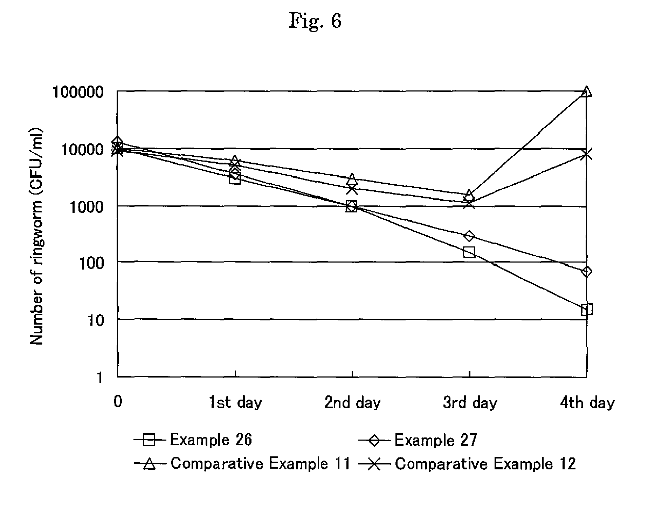

A sodium linoleate salt was dissolved in functional water, which was obtained by treating tap water supplied in Matsuyama City, Ehime Japan, with a cation exchange resin, to prepare a disinfectant of 1 mM concentration. Ringworm (Trichophyton mentagrophytes) was added to the disinfectant in an amount of about $1 \times 10^4$ CFU/ml, which was shaken at 35°C, and the diachronic change in the number of the ringworm was measured. The number of the ringworm was measured in the same manner as in Examples 11 to 19. The results are shown in Fig. 6.

Example 27

The operation was implemented in the same manner as in Example 26, except for using a sodium linolenate salt instead of a sodium linoleate salt, and the diachronic change in the number of ringworm was measured. The results are shown in Fig. 6.

Comparative Example 11

The operation was implemented in the same manner as in Example 26, except for using tap water of Matsuyama City, Ehime Japan, instead of functional water, and the diachronic change in the number of ringworm was measured. The results are shown in Fig. 6.

Comparative Example 12

The operation was implemented in the same manner as in Example 27, except for using tap water of Matsuyama City, Ehime Japan, instead of functional water, and the diachronic change in the number of ringworm was measured. The results are shown in Fig. 6.

The present invention can be practiced in other various forms without departing from the spirit and principal features thereof. In view of this, the embodiments or examples described above merely serve as exemplification in every respect and should not be construed restrictively. A scope of the present invention is defined by claims, and is by no means bound by the text of the specification. Furthermore, all modifications and alternations belonging to the equivalent scope of the claims fall within the scope of the present invention.

**Claims**

1.  A disinfectant comprising:

    water from which polyvalent cations are removed and to which a sodium ion is added, and
    a surfactant.

2.  The disinfectant according to claim 1, which is used for bathrooms.

3.  The disinfectant according to claim 1, which is used for tubs of washing machines.

4.  The disinfectant according to claim 1, which is used for kitchens.

5. The disinfectant according to claim 1, which is used for toilets.

6. The disinfectant according to claim 1, which is used for washstands.

7. The disinfectant according to claim 1, which is used for drainpipes.

8. The disinfectant according to claim 1, which is used for daily commodities.

9. The disinfectant according to any of claims 1 to 8, wherein the surfactant is a fatty acid salt.

10. The disinfectant according to claim 9, wherein the fatty acid salt is an unsaturated fatty acid salt.

11. The disinfectant according to claim 10, wherein the unsaturated fatty acid salt is at least one selected from the group consisting of linoleate, linolenate, myristolate and palmitolate.

Fig. 1

Fig. 2

## Fig. 3

(CFU/ml)

Legend: ◆ Example 20; ▲ Example 21

## Fig. 4

(CFU/ml)

Legend: ▲ Example 22; ◆ Example 23

Fig. 5

(CFU/ml)

Legend:
- ◆ Example 24
- ▲ Example 25

## Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1197598 A